# EUROPEAN PATENT APPLICATION

(11) **EP 2 017 325 A2**
(43) Date of publication of application: **21.01.2009**
(21) Application number: 08158357.7
(22) Date of filing: 16.06.2008
(51) Int. Cl.: C10J 3/66

(54) **Apparatus for decomposition of vegetable organic substances and thermochemical fuel gas production, and related method**

(30) Priority: 19.06.2007 IT TO20070438
(71) Applicant: Martini, Pierluigi, 10030 Vestigne (TO) (IT); Martini, Aldo, 10093 Collegno (TO) (IT); Martini, Stefano, 10147 Torino (IT)
(72) Inventor: Martini, Pierluigi, 10030 Vestigne (TO) (IT)
(74) Representative: Dini, Roberto

(57) **Abstract**

The invention relates to an apparatus and method for decomposition of vegetable organic substances and thermochemical fuel gas production, said apparatus comprising: a dryer (1) which allows to reduce the moisture content of a first organic substance (10) and to obtain dried biomass (12), and a gas producer comprising a pyrolysis stage (3) for obtaining substances (15) comprising solid substances as well as condensable and incondensable gases, and a gasification stage (4) for gasifying the substances (15) produced by the pyrolysis stage (3) and for producing fuel gas (41), wherein the apparatus further comprises a torrefaction reactor (2), located between said dryer (1) and said pyrolysis stage (3) of the gas producer, for torrefying the dried biomass (12) and obtaining torrefied biomass (13), and a milling device (51) located between the torrefaction reactor (2) and the pyrolysis stage (3), said milling device (51) allowing to pulverize the torrefied biomass (13) and to obtain pulverized torrefied biomass (14).

## Description

The present invention relates to an apparatus and a related method for decomposition of vegetable organic substances and thermochemical fuel gas production.

In Europe and in most industrialized countries, at the present time, technologies for thermochemical conversion of biomass into energy for fuel gas production are on the one hand supported by public authorities in view of their potential for replacing fossil energy sources, especially for electric power generation, while on the other hand they are subject to severe emission regulations which apply to all thermal apparatuses in general, and to internal combustion engines and turbines fed with fuel gas in particular.

The gas depuration step, which is carried out in order to attempt to reduce the pollutants produced by the conversion process, is also subject to strict regulations in regard to the final disposal of solid waste and, when wet depuration systems are used, to water pollution.

Since the various regulations cannot be easily complied with, in the industrialized countries there are just a few plants which have gone past the start-up step and have operated stably for some time, i.e. which can be operative about 7,000 hours per year and provide a positive differential between profits and management costs, thus ensuring reasonable investment return times.

An environment-friendly biomass gasification plant capable of achieving the investors' economical objectives must fulfill at least the following conditions:
A) the organic substance must be fed continuously, and the plant's gasification section must be connected to an electric power production section, possibly by cogeneration. This condition maximizes the economical value of the produced gas, but gas production is made critical due to the fact that any failure in service of the plant may result in considerable technical and economical damage;
B) compliance with regulations pertaining to emissions, waters and waste.

In the last years, research aiming at providing continuous-feed plants suitable for complying with the fundamental emission requirements have been focused on a clear separation between the biomass decomposition step, also called pyrolysis, and the subsequent gasification step.

During the pyrolysis step, incondensable gases at normal temperature and pressure are generated together with condensable vapours known as "tars"; below is a definition of "tar", chosen among the various available ones: "Tar has been operationally defined in gasification work as the material in the product stream that is condensable in the gasifier or in downstream processing steps or conversion devices" (T.A. Milne, R.J. Evans, N. Abatzoglou - Biomass Gasifiers "Tars: Their Nature, Formation and Conversion - NREL, NREL/TP-570-25357, November 1998).

The main objects of the gasification step are to convert "tar" into incondensable gases as much as possible and to obtain incondensable gases containing the highest percentage of combustible gases, in particular carbon oxide, hydrogen and gaseous hydrocarbons. In gas producers based on the so-called "downdraft" or cocurrent technology, adopted by most current suppliers in the gas production market, which use a single reactor wherein a fraction of the supplied biomass bums and generates heat, the separation between pyrolysis and gasification is not usually clear, and the simultaneous presence of compounds formed during each step is deemed to be a contributory cause of formation of the most undesired pollutants contained in "tar". Among these, much attention is being paid to polyaromatic hydrocarbons (also referred to as "PAH"), and in particular to the formation of PAHs comprising a number of aromatic rings higher than four, since many of such PAHs are considered to be carcinogenic. Moreover, PAHs are considered to be the precursors of thin powders, the content of which in the emissions released into the atmosphere must comply with strict limits set out by the law.

From the extensive literature dedicated to PAH formation in relation to cellulose, lignin and hemicellulose, which are the most abundant natural organic substances available on earth, it appears that there is consensus on the following statements, though some not easily explicable differences still exist among the experimental results obtained by the various authors:
- PAH formation with lignin-cellulose substances has been observed starting from as low as 300°C;
- PAH formation is opposed by counter-reactions concerning the precursors of the PAHs themselves, so that, if there are reactive gases in the atmosphere surrounding the particles, there will be a different behaviour between the surface and the core of the mass of the heated substance;
- it has been ascertained that PAHs may form from both lignin and cellulose;
- in the case of lignin, it is believed that the presence of benzene rings in its constituting compounds promotes the formation of naphthalene, which in turn is considered to be a fundamental intermediate for high molecular weight PAHs;
- when cellulose is heated in the absence of oxygen at temperatures between 300°C and 600°C, in addition to charcoal and other volatile substances forming as a result of the typical chemical transformations of the carbonization process, such as depolymerization, dehydration, decarbonylation, decarboxylation, dehydrogenation and reactions leading to new links ("cross-linking"), formation of condensed aromatic structures of PAHs will also occur;
- with temperatures between 300°C and 600°C, process duration is very important because a longer duration leads to an increased content in multiple aromatic core ("heavy") PAHs. However, it is generally stated that the velocities of the typical reactions taking place during the aromatic core condensation step are quite slow within said temperature range;
- over 600°C, up to approximately 900°C, experimental tests carried out in many different conditions have shown a progressively increased "heavy" PAH content in the final products (whether solid, liquid, or gaseous) as temperature is raised, while duration appears to be less influential;
- while there seems to be a common conclusion stating that "heavy" PAHs are wholly stable between 800°C and 900°C even in the presence of oxygen, the authors do not however agree as to the temperature over which all PAHs can be decomposed by heat or can react by burning with oxygen, i.e. whether a temperature of 1,000°C will suffice or not.

In addition to the two minimum requirements of a gasification plant, i.e. continuous feeding (condition A) and, most importantly, compliance with emission limits (condition B), the main conditions which can determine a favourable economic balance of a gasification plant are the following:
C) gas composition with a high content in carbon oxide (CO), hydrogen (H₂) and volatile hydrocarbons (CₙHₘ), where n is preferably comprised between 1 (methane) and 4 (e.g. butane).
   As for the index m, it may vary from m = 2n+2, which is typical of saturated hydrocarbons (e.g. methane [CH₄]), to m = 2n (e.g. ethylene [C₂H₄]), and to m = 2n - 2 (e.g. acetylene [C₂H₂]).
   Values of Lower Heating Value (LHV), referred to fuel gas in the anhydrous state, of 8-10 MJ/Nm³ are considered to be a good result against values around 5 MJ/Nm³ which are typical of more elementary gasifiers having a single reactor, where heat is generated within the reactor itself by partial biomass combustion.
   This favourable condition (condition C) is obtained by providing the necessary heat in a thoroughly or at least partially different manner from the heat generated by combustion of a portion of biomass with air, thus proportionally reducing the nitrogen content in the fuel gas. For example, among others, some of the feasible alternatives for obtaining high LCP values are the following: heat conduction and irradiation through the reactor walls, heat convection through superheated steam, circulation of a fluidized bed containing preheated incombustible particles, use of oxygen instead of air; at present, however, this latter alternative is not economically advantageous due to the high costs implied by such a substitution;
D) possibility of feeding the apparatus with organic substances in the form of coarse particles, thus avoiding the problems and costs related to fine milling of the raw material.
   In plants with separate pyrolysis and gasification stages, this favourable condition (condition D) is obtained to a limited extent in certain fluid beds through the effect of friction caused by rubbing against the inert material;
E) possibility of using wet organic substances without having to necessarily use low moisture content biomass or to carry out a previous drying process outside the plant processing cycle.
   This favourable condition (condition E) is obtained by means of a complete process which generates intense heat, thus also providing the heat required for evaporating large quantities of water without jeopardizing the pyrolysis and gasification steps. Of course, the additional heat must not be produced by combustion of a portion of the material to be gasified with air, since this would increase the nitrogen content in the final gas;
F) recovery of the heat contained in the produced fuel gas.
   This favourable condition (condition F) is obtained by delivering the fuel gas to the final depuration step only after having subtracted most of the sensible enthalpy from it through suitable heat exchangers, e.g. for obtaining air preheating, steam from water, and steam superheating.

United States patent No. US 7,214,252 relates to an apparatus for decomposition of vegetable organic substances and thermochemical fuel gas production, said apparatus comprising three separate reaction zones:
- a pyrolysis reactor at 450-750°C, where biomass is dried and decomposed for the first time, resulting in a partial gasification thereof,
- a circulating fluid bed at 800-1,050°C, where pyrolysis residues are incinerated,
- a pyrolysis gas reaction zone, which outputs the final fuel gas.

In the fluid bed, the main purpose of which is to generate the heat needed for the entire process, the generated heat is yielded internally to an incombustible material, e.g. comprising sand and ashes. A continuous circulation of particles of said material between the fluid bed and the pyrolysis reactor supplies indirect heat to the biomass contained in said pyrolysis reactor, so that the released gases are virtually nitrogen-free. Without any direct contact, the pyrolysis gases flow through the high-temperature zone into which the fluid bed combustion gases are outputted; consequently, heat is supplied indirectly into this plant section as well.

However, the apparatus for decomposition of vegetable organic substances and thermochemical fuel gas production described in US patent No. US 7,214,252 has some drawbacks, because the fact that the pyrolysis reactor and the fluid bed communicate with each other through circulation of solid material, inevitably implies an undesired exchange between the gaseous phases of the two reactors. As a matter of fact, in order to attempt to prevent such exchange from occurring, said apparatus comprises a pair of blowers, in particular a first blower for fuel gas extraction and a second blower for extracting the combustion products from the fluid bed, which must be matched through mutually related draught values. However, this condition is not easily attainable, because the various phenomena taking place in the various plant portions may be subject to great variations.

A further apparatus for decomposition of vegetable organic substances and thermochemical fuel gas production has been described in European patent No. EP1278813B1, which relates to a method that includes four fundamental processing stages:
- drying by means of superheated steam (stage A),
- pyrolysis, in particular at 300-800°C, by means of superheated steam, leading to generation of pyrolysis gas and charcoal (stage B),
- oxidation of the pyrolysis gases, in particular at 1,000-1,300°C (stage C),
- feeding the oxidized hot gases and charcoal into a reactor wherein the final fuel gas is obtained (stage D).

The method described in European patent No. EP1278813B1 provides for continuous feeding and uses a connection to an internal combustion engine or a turbine; it fulfills the requirement of keeping the pyrolysis step separate from the gasification step. Furthermore, it also adopts a charcoal gasification derivation technology, i.e. it uses superheated steam as a heating means and as a chemical agent for decomposing carbon substances, and it also allows for using wet organic substances and recovering the fuel gas heat, e.g. for the purpose of obtaining superheated steam through a suitable heat exchanger. Another special feature of the method according to the aforementioned European patent is the application of superheated steam to the wet organic substance drying step and the use of the same vaporized water within the process, since it becomes incorporated into the superheated steam.

However, the above-described equipment has several drawbacks as well. In particular, the method described in said European patent does not allow for obtaining high LCP values, mostly because of air being supplied during the pyrolysis gas oxidation step C. In addition, the actual transformation taking place during stage D, wherein the charcoal produced during the pyrolysis stage B is turned into incondensable fuel gases through the hot gases generated at stage C, requires that the charcoal used be suitable for said transformation, i.e. it must consist of small particles having a large specific surface suitable for reacting with the gases. Nothing is stated in said patent about this requirement. It can therefore be supposed that said method is limited to small-size raw biomass, i.e. that said method does not allow to use biomass consisting of coarse particles.

Apart from the remarkable specific plant engineering differences illustrated in detail in the respective descriptions of the two above-mentioned patents, the fundamental difference between said two methods for decomposing organic substances is that, in US patent No. US 7,214,252, the stage where the final fuel gas is produced is the one of the pyrolysis gas reactor, into which no oxygen is supplied and therefore no oxidation occurs, thereby attaining the object of obtaining a high LCP value; it should also be noted that said reactor absorbs heat. On the contrary, according to European patent No. EP1278813B1, the pyrolysis gases are delivered to the oxidation reactor, the main purpose of which is to supply heat, while the gasification reactor performs the task of obtaining incondensable gases from the charcoal produced during the previous pyrolysis step.

In this frame, the main object of the present invention is to provide an apparatus for decomposition of vegetable organic substances and thermochemical fuel gas production, as well as to a related method, which allow to overcome the aforementioned drawbacks.

In particular, the present invention aims at providing an apparatus for decomposition of vegetable organic substances and thermochemical fuel gas production, as well as to a related method, which allow simultaneously to:
- feed organic substance continuously and connect the plant's gasification section to an electric power production section, possibly by cogeneration;
- comply with regulations pertaining to emissions, waters and waste;
- obtain a gas having a high content in carbon oxide (CO), hydrogen (H₂) and volatile hydrocarbons (CₙHₘ);
- feed the apparatus with organic substances consisting of coarse particles;
- use wet organic substances without having to use low-moisture biomass only;
- recover the heat contained in the produced fuel gas.

Said objects are achieved by the present invention through an apparatus for decomposition of vegetable organic substances and thermochemical fuel gas production, and a related method, incorporating the features set out in the appended claims, which are intended as an integral part of the present description. Further objects, features and advantages of the present invention will become apparent from the following detailed description and from the annexed drawings, which are supplied by way of non-limiting example, wherein:
- Fig. 1 shows a schematic view of an apparatus for decomposition of vegetable organic substances and thermochemical fuel gas production;
- Fig. 2 shows a variant embodiment of the apparatus of Fig. 1.

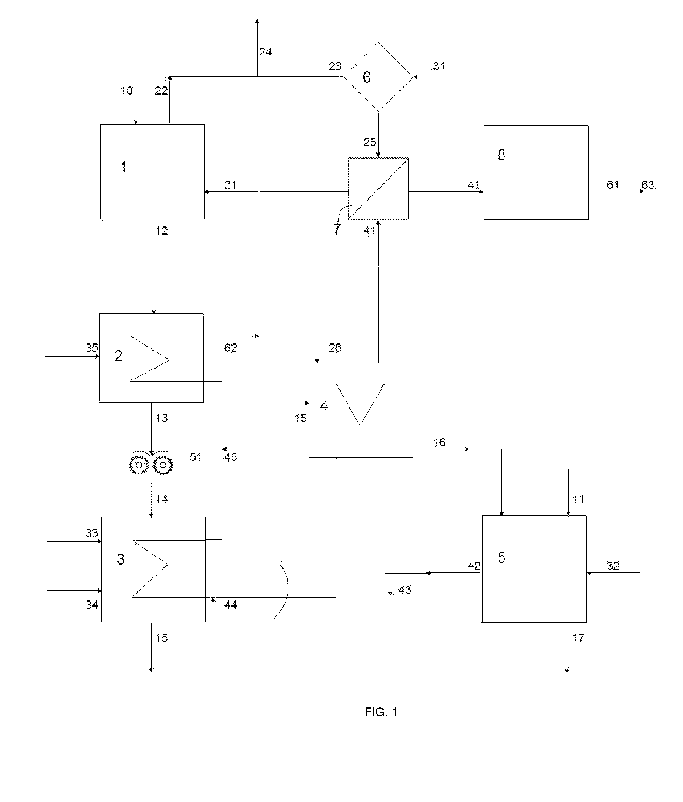

Referring now to Fig. 1, an apparatus for decomposition of vegetable organic substances and thermochemical fuel gas production according to the present invention comprises:
- a dryer 1 which allows to reduce the moisture contained in a first organic substance 10 and to obtain dried biomass 12; preferably, said dryer consists of a rotary furnace provided with inner fins;
- a gas producer consisting of a pyrolysis stage 3, for obtaining substances 15 comprising solid substances as well as condensable and incondensable gases, and a gasification stage 4, for gasifying the substances 15 produced by the pyrolysis stage 3 and producing fuel gas 41; in a specific embodiment of the gas producer, both the pyrolysis stage 3 and the gasification stage 4 are furnaces containing a plurality of radiant heat tubes; in another specific embodiment, there is a single furnace fitted with radiant heat tubes, wherein pulverized torrefied biomass 14 passes through a first zone of the furnace at a typical pyrolysis temperature, thus turning into substances 15, which then enter a second zone at a typical gasification temperature, thus turning into fuel gas 41. Typical pyrolysis temperatures are in the range between 350 °C and 600 °C, preferably between 400 °C and 450 °C, whereas typical gasification temperatures are in the range between 800 °C and 1,000 °C, preferably 900 °C.

In accordance with the present invention, said apparatus comprises a torrefaction reactor 2 located between said dryer 1 and said pyrolysis stage 3, for the purpose of torrefying the dried biomass 12 and obtain torrefied biomass 13. In a specific embodiment, the torrefaction reactor 2 is a multiple hearth with rotary arms fitted with rabble teeth. The particular position of the torrefaction reactor 2 in the apparatus according to the present invention allows for optimal control of the chemical phenomena which may arise during the decomposition of said first organic substance 10. In fact, an intermediate torrefaction processing stage placed between the drying and pyrolysis stages ensures that the first organic substance 10 received by the pyrolysis stage 3 has undergone the endothermal phenomena that precede its scission into the following three constituent groups within the subsequent pyrolysis stage: incondensable gases, condensable vapours (tar) and solid residue (e.g. charcoal and ashes). Wood may advantageously be used as a first organic substance 10.

The apparatus according to the present invention also comprises a milling device 51 located between the torrefaction reactor 2 and the pyrolysis stage 3; said milling device 51 provides pulverization of the torrefied biomass 13, which has a low mechanical strength, in particular to shocks, thereby obtaining pulverized torrefied biomass 14. Preferably, said milling device 51 comprises at least two pairs of rotary drums turning in opposite directions and provided with teeth having progressively decreasing gaps, so that pulverized torrefied biomass, or granular biomass 14, made up of small particles, in particular not bigger than 2 mm, can be obtained.

Consequently, when the granular biomass 14 is supplied into the pyrolysis stage 3, the decomposition reactions take place in a sufficiently homogeneous manner throughout the granular biomass 14 thanks to the large free area in relation to the treated mass. Said good reactivity, along with superheated steam 34 being used as a heating means as well as a chemical agent for decomposing carbon substances, minimize the formation of undesired polyaromatic hydrocarbons (PAH).

As regards the temperature range between 300°C and 600°C within which pyrolysis is conducted, the present invention takes into account the fact that it is necessary to keep as short as possible the time during which a portion of the granular biomass 14 is subjected to the action of heat without being at the same time exposed to the action of gaseous chemical agents causing counter-reactions in opposition to those reactions that lead to PAH formation; this result is attained by conducting the pyrolysis process on granular biomass 14 consisting of fine particles obtained by means of previous torrefaction and pulverization treatments.

As far as the next gasification step is concerned, the aforementioned report NREL/TP-570-25357 points out a fundamental dilemma (Elliott 1986) which needs to be solved in order to come to a decision about the gasification stage: high temperatures promote high biomass conversion efficiency and high velocities, but they also lead to production of "tar" types which are more difficult to remove during the subsequent gas depuration stages. This consideration, along with the fact that at temperatures higher than 900°C those parts of the apparatus which are in contact with such high temperatures require the use of more expensive materials and particular attention must be paid to plant design and management, has led to the conclusion that a temperature of 900°C is preferable for the apparatus' gasification stage.

Preferably, the apparatus according to the present invention also comprises at least one burner 5 for incinerating residues 16 coming from the gasification stage 4 and for generating heat, said at least one burner 5 being fed with a second organic substance 11. As a consequence, the apparatus according to the present invention feeds the dryer 1 with the first organic substance 10 and the burner 5 with the second organic substance 11.

Said burner 5 of Fig. 1, where number 32 indicates the air inlet, allows to produce all or most of the heat required for the general operation of the apparatus according to the present invention, and said second organic substance 11 may be less expensive than the first organic substance 10 supplied to the gasification stage; for example, said second organic substance 11 may comprise a larger granulometric fraction which cannot pass through a sieve, the purpose of which is to allow the dryer 1 to be fed in a controlled manner even as concerns the size of the treated biomass. Furthermore, the burner 5 also bums gasification residues 16, thus acting substantially as an incinerator. If the burner 5 is a furnace where the combustion process may leave solid residues 17 consisting essentially of ash, the latter will be extracted by an extractor according to a known technique.

Said burner 5 may in any case be replaced with technically equivalent elements, so long as the adopted solution complies with the fundamental condition that all the heat necessary for the chemical and chemical-physical processes taking place at the various stages of the apparatus is obtained through combustion of vegetable organic substances or fuel gas produced by gasification of vegetable organic substances. The vegetable organic substances that can be used for feeding the burner completely or partially may include both the dried biomass 12 coming from the dryer 1 and the granular biomass 14 consisting of small particles obtained by means of the milling device 51.

The apparatus according to the present invention also comprises a plenum chamber 6 adapted to receive an air flow 31 and a gas flow 22 from the dryer 1 for the purpose of producing an air-steam mixture 25.

The apparatus according to the present invention further comprises a heat exchanger 7 adapted to receive the fuel gas 41 produced by the gasification stage 4, so that said fuel gas 41 can warm up said air-steam mixture 25; a first portion 21 of said mixture 25 is used by the dryer 1, while a second portion 26 of said mixture 25 is used by the gasification stage 4.

Once it has flowed through a depuration section 8, where it has been cooled down and cleaned, the fuel gas 41 is suitable for feeding an internal combustion engine or a turbine (not shown in the drawings), or else it can be delivered into a network for being distributed to various user devices.

The advantages of the method for decomposition of vegetable organic substances and thermochemical fuel gas production according to the present invention are apparent from the above description. In particular, the method for gasification of organic substances according to the present invention is applicable to a thermal power range between approx. 0.1 MW and approx. 10 MW, with reference to the energy content of the feed material used, and allows to use, for example, big and wet wood chips as an organic substance source.

In larger plants, the method according to the present invention allows to use fresh materials (wet-based moisture content below 60% in weight), with a large quantity of bark (below 30% in weight), and a maximum percentage of tolerated overlength of approx. 1% in weight for a size of 220 mm.

The method according to the present invention uses an organic substance 10 of one or mixed vegetable origins, said organic substance 10 being preferably the undersieve of an appropriate sieving process.

By way of example, the organic substance 10 is made up of 50% in weight of water and 50% in weight of dry substance, the dry weight having in particular the following elementary composition: carbon (C) 51.32%, hydrogen (H) 6.02%, oxygen (O) 41.66%, ashes 1%. The LCP value of the organic substance 10 is 18.5 MJ/kg, with reference to the dry weight of the fuel as is.

The method according to the present invention comprises the steps of:
- drying an organic substance 10 in a dryer 1, for reducing the moisture content of said first organic substance 10 and obtaining dried biomass 12;
- torrefaction of said dried biomass 12 in a torrefaction reactor 2, for obtaining torrefied biomass 13;
- pulverization of the torrefied biomass 13 in a milling device 51, for obtaining granular biomass 14 consisting of small particles, preferably not exceeding 2 mm;
- pyrolysis of the pulverized torrefied biomass 14 in a pyrolysis stage 3, into which superheated steam 34 is also supplied, for obtaining substances 15 comprising solid substances as well as condensable and incondensable gases;
- gasification of the substances 15 in a gasification stage 4, for producing fuel gas 41.

Said torrefaction step between the drying and pyrolysis steps provides optimal control of the chemical phenomena which may arise during the decomposition of said first organic substance 10, and ensures that an already partially decomposed first organic substance 10 arrives at the pyrolysis stage 3. Furthermore, the pulverization of the torrefied biomass 13 in the milling device 51 allows to obtain, in the pyrolysis stage 3 also fed with superheated steam 34, homogeneous decomposition reactions throughout the granular biomass 14 and, consequently, it allows to minimize the formation of undesired polyaromatic hydrocarbons (PAH).

Preferably, the method according to the present invention comprises a main heat production step which uses a burner 5 fed with a second organic substance 11, said main heat production step being adapted to produce the heat required for the general operation of the apparatus and being associated with an incineration step for incinerating residues 16 coming from the gasification stage 4 in said burner 5.

As aforementioned, the drying step occurring in the dryer 1 is adapted to reduce the moisture content of the organic substance 10, e.g. from 50% in weight (wet-based), to 20%; the dryer 1 outputs both dried biomass 12 and a gas flow 22. Preferably, the method according to the present invention comprises a step of warming up said dryer 1 through a first portion 21 of an air-steam mixture 25, said mixture 25 being obtained in a plenum chamber 6 by mixing the gas flow 22 exiting the dryer 1 with an air flow 31.

A second portion 26 of the air-stream mixture 25 is delivered to the gasification stage 4, for the purpose of keeping the operating conditions of the gasification stage 4 at the reference values. Of course, the air contained in said second portion 26 acts as an oxidant in the gasification stage 4, thus also providing heat through exothermal combustion reactions.

The air flow 31 supplied into the plenum chamber 6, and therefore into the air-stream mixture 25 that is recirculating between the dryer 1 and a heat exchanger 7, may vary between a null value and a value corresponding to an ER value ("equivalence ratio" referred to the value 1 assigned to the stoichiometric air required for combustion) up to 0.15. By way of example, the characteristic operating values of the apparatus and method according to the present invention may correspond to an ER value of 0.08.

Depending on the air and steam flow rates delivered to the gasification stage 4 set as reference values, the recirculation of the air-steam mixture 25 is balanced by removing a gas flow portion 24 from the gas circuit, e.g. by delivering it to a suitable equipment (not shown in the annexed drawings) where the heat of said portion is partially recovered.

In order to counter the formation of solid or gaseous PAH precursor products, it is appropriate that a certain H₂O content in vapour state is present in the atmosphere of the torrefaction reactor 2. Therefore, superheated steam 35 is also supplied into the torrefaction reactor, said superheated steam 35 being obtainable in different ways, e.g. by using the heat of the exhaust gases of an internal combustion engine or a turbine (not shown) that use the fuel gas 41 produced by the apparatus.

Since the reactions taking place in the torrefaction reactor 2 are endothermal ones, it is necessary to provide heat obtained indirectly; to this end, the torrefaction reactor 2 is manufactured according to one of the different construction alternatives derived from the study of the technology known in the art for exploiting gas-contained heat through thermal conduction and/or irradiation phenomena. In this case, the heat source consists of combustion products 42 of the burner 5, which remain at a sufficiently high temperature even after having transferred a portion of their heat to the gasification stage 4 and subsequently to the pyrolysis stage 3. However, in the event that the temperature of the combustion products 42, which have already yielded a portion of their heat to the gasification stage 4 and subsequently to the pyrolysis stage 3 by thermal conduction, is not sufficient to ensure a proper torrefaction process, it may be increased through a step of mixing the partially cooled combustion products 42 of the burner 5 with combustion products taken from an outlet of said burner 5. For this purpose, if necessary, a fraction of the latter is taken from a partial bypass 43 and is then supplied into a position 45 of the torrefaction reactor 2.

Depending on the organic substance treated, the temperature in the torrefaction reactor 2 is kept between 200°C and 280°C, and a portion of the hemicellulose contained in the dried biomass 12 is gasified. The decomposition of hemicellulose, which leads to gas formation, may even be total; nonetheless, the purposes for which the torrefaction reactor 2 has been included in the process do not require such an outstanding result. The more complete the conversion of hemicellulose into gas, the higher the LCP value of the remaining torrefied biomass 13. By way of example, a decomposition rate of approx. ¼ of the original hemicellulose (7.5% in weight with reference to the dry weight of the initial biomass) will increase the LCP value of the torrefied biomass 13 to approx. 19 MJ/kg. The produced gases, mainly consisting of acid-reacting condensable vapours (containing several acids and aldehydes, in particular acetic acid), correspond to an energy content of 5% of the total content in the initial biomass. In the method according to the invention, unlike other methods relating to torrefaction, the materials used for manufacturing the various sections of the apparatus are suitable for withstanding the etching exerted by the gases formed in the torrefaction reactor 2, so that the pyrolysis stage 3 receives both solid substances, i.e. the granular biomass 14, and such gases.

The temperature range of the pyrolysis stage 3 is between 350°C and 600°C, preferably 400/450°C. In accordance with the existing literature, the reactions taking place in the pyrolysis stage 3 are complex ones. Initially, hemicellulose demolition is completed (endothermal reactions) and is then followed by exothermal reactions, after which the process becomes deeply endothermal. To this end, the pyrolysis stage 3 is provided in one of the different construction alternatives derived from the study of the technology known in the art for exploiting gas-contained heat through thermal conduction and/or irradiation phenomena. In this case as well, the heat source consists of the combustion products 42 of the incinerator 5, which remain at a sufficiently high temperature even after having yielded a portion of their heat to the gasification stage 4. However, in the event that the temperature of the combustion products 42, which have already yielded a portion of their heat to the gasification stage 4 by thermal conduction, is not sufficient to ensure a proper pyrolysis process, it may be increased through a step of mixing the partially cooled combustion products 42 of the burner 5 with combustion products taken from an outlet of said burner 5, a fraction thereof being taken from the partial bypass 43 and supplied into a further position 44 of the pyrolysis stage 3.

The annexed Fig. 1 shows that a step of supplying an air flow 33 into the pyrolysis stage 3 may be included, should it be ascertained that the quantity of indirect heat is insufficient, said air flow 33 being preheated in a suitable exchanger (not shown), e.g. by using the very same combustion products 42.

The process also includes a step of supplying superheated steam 34 into the pyrolysis stage 3, said superheated steam 34 being obtainable in different ways, e.g. by using the heat of the exhaust gases of an internal combustion engine or a turbine (not shown) that use the fuel gas 41 produced by the apparatus.

In a further embodiment, all substances 15 produced in the pyrolysis stage 3, in particular residual solid substances 15 and condensable and incondensable gases, enter the gasification stage 4 from above. In particular, the bottom of the gasification stage 4 comprises a movable grid which opens when the internal pressure within the gasification stage 4 exceeds a certain preset limit; the residues 16 are then carried to the burner 5.

In another embodiment, the residual solid substances 15 and the condensable and incondensable gases obtained in the pyrolysis stage 3 can be carried to the gasification stage through a blower or a steam injector and enter said stage from below. In this case, any solid residues downstream of the gasification stage are separated from the gases during the depuration step.

The second portion 26 of the air-steam mixture 25 participates in supplying the heat required for reaching a temperature between 800°C and 1,000°C, preferably 900°C, in the gasification stage 4. Most of the necessary heat is obtained by conduction and irradiation from the combustion products of the burner 5. To this end, the gasification stage 4 is provided in one of the different construction alternatives derived from the study of the technology known in the art for exploiting gas-contained heat through thermal conduction and/or irradiation phenomena. The residue of the gasification process is less than 5% of the initial dry substance, exclusive of ashes.

A typical composition of the fuel gas 41 is the following: gaseous hydrocarbons expressed as CH₄ 2.45%, CO 27.01%, CO₂ 6.22%, H₂ 34.16%, H₂O 18.45%, N₂ 11.71 %, with an LCP value of 8.05 MJ/Nm³. Of course, said LCP value is increased when the fuel gas 41 passes through a depuration section 8, due to the degree of condensation of the water contained in the gas itself.

The construction of the burner 5 depends on the solution adopted for transferring heat from the burner 5 to the gasification stage 4. According to a possible construction, a large portion of an outer surface of the burner 5 is in contact with an outer surface of the gasification stage 4, and the combustion products 42 of the burner 5 lap as much as possible the outer surface of the gasification stage 4 and/or tubes carry the combustion products 42 through the gasification stage 4.

The highest temperature reached in the burner 5 partly depends on the characteristics of the second organic substance 11 used; should it be necessary to reach temperatures of 1,200°C or higher, the burner 5 will have to be fed with a sufficiently dry second organic substance 11. An additional system (not shown) may also be included for preheating the oxidant air 32.

There may also be three separate gaseous flows, in particular:
- a first flow acting in the dryer 1 for recirculating the first portion 21 of the air-steam mixture 25 (the positions and number of the respective blowers are not indicated in the annexed drawings, since this data depends on the particular type of construction chosen);
- a second flow for the fuel gas 41, in particular comprising a first blower 61 located downstream of the depuration section 8;
- a third flow for the combustion products 42 of the burner 5, in particular comprising a second blower 62 located downstream of the torrefaction reactor 2.

The advantages of an apparatus for decomposition of vegetable organic substances and thermochemical fuel gas production and of a related method according to the present invention are apparent from the above description. In particular, said advantages are due to the fact that the apparatus and method according to the present invention allow simultaneously to:
- feed organic substance continuously and connect the plant's gasification section to an electric power production section, possibly by cogeneration;
- comply with regulations pertaining to emissions, waters and waste;
- obtain a gas having a high content in carbon oxide (CO), hydrogen (H₂) and volatile hydrocarbons (CₙHₘ);
- use organic substances provided in the form of coarse particles;
- use wet organic substances without having to use low-moisture biomass only;
- recover the heat contained in the produced fuel gas.

The apparatus and method described herein by way of example may be subject to many possible variations without departing from the novelty spirit of the inventive idea; it is also clear that in the practical implementation of the invention the illustrated details may have different shapes or be replaced with other technically equivalent elements.

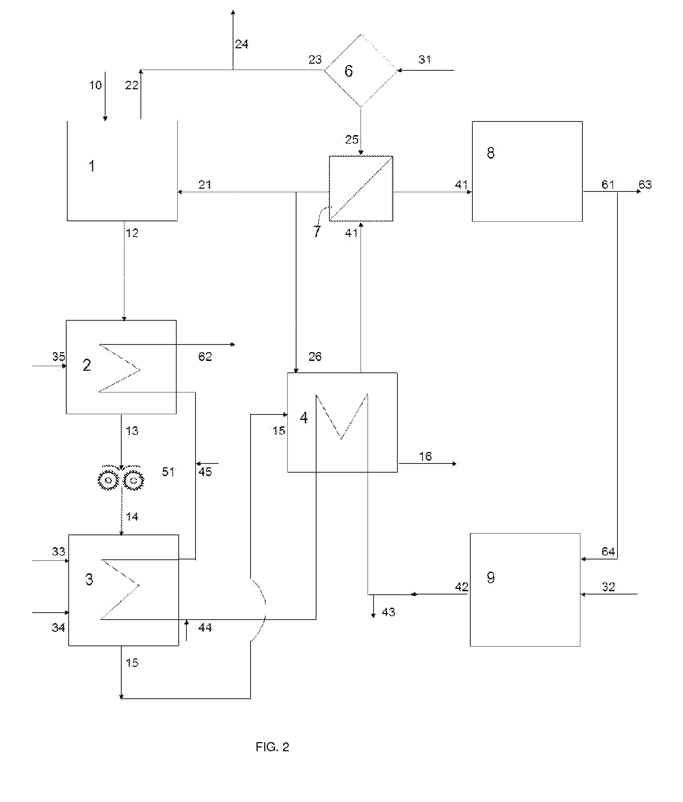

For example, Fig. 2 describes a possible variant of the apparatus of Fig. 1 wherein heat is not produced by means of the biomass-fed burner 5, but through one or more burners 9 fed with a fraction 64 of the fuel gas 63 produced in the gasification stage 4, previously cooled and cleaned by the depuration system 8; in this figure, number 32 indicates the air inlet to the burners. In this case, the solid residues 16 of the gasification stage 4 are collected separately within a device not shown in Fig. 2, and are then treated as by-products or waste.

It can therefore be easily understood that the present invention is not limited to the above-described apparatus and method, but may be subject to many modifications, improvements or replacements of equivalent parts and elements without departing from the inventive idea, as clearly specified in the following claims.

## Claims

1. Apparatus for decomposition of vegetable organic substances and thermochemical fuel gas production, comprising:
- a dryer (1) which allows to reduce the moisture content of a first organic substance (10) and to obtain dried biomass (12);
- a gas producer comprising a pyrolysis stage (3) for obtaining substances (15) including solid substances as well as condensable and incondensable gases, and a gasification stage (4) for gasifying the substances (15) produced by the pyrolysis stage (3) and for producing fuel gas (41),
**characterized in that** said apparatus comprises a torrefaction reactor (2), located between said dryer (1) and said pyrolysis stage (3) of the gas producer, for torrefying the dried biomass (12) and obtaining torrefied biomass (13), and a milling device (51) located between the torrefaction reactor (2) and the pyrolysis stage (3), said milling device (51) allowing to pulverize the torrefied biomass (13) in order to obtain pulverized torrefied biomass (14).

2. Apparatus according to claim 1, **characterized by** comprising at least one burner (5) for producing the heat required for the chemical and chemical-physical processes taking place in at least said gasification stage (4), said pyrolysis stage (3) and said torrefaction reactor (2).

3. Apparatus according to claim 2, **characterized in that** said at least one burner (5) is fed with a second organic substance (11) and produces combustion products (42).

4. Apparatus according to claim 3, **characterized by** comprising tubes carrying the combustion products (42) through the gasification stage (4).

5. Apparatus according to claim 2, **characterized in that** said at least one burner (5) is fed with a fraction (64) of fuel gas (63) produced in the gasification stage (4), said fuel gas (63) being cooled and cleaned by means of a depuration system (8).

6. Apparatus according to claim 1, **characterized in that** said pyrolysis stage (3) and said gasification stage (4) are each provided as a single furnace containing a plurality of radiant heat tubes.

7. Apparatus according to claim 1, **characterized in that** said pyrolysis stage (3) and said gasification stage (4) are comprised in a single furnace, wherein pyrolysis takes place in a first zone and gasification takes place in a second zone.

8. Method for decomposition of vegetable organic substances and thermochemical fuel gas production, said method comprising the steps of:
- drying a first organic substance (10) in a dryer (1), for reducing the moisture content of said first organic substance (10) and obtaining dried biomass (12);
- torrefying said dried biomass (12) in a torrefaction reactor (2), for obtaining torrefied biomass (13);
- pulverizing said torrefied biomass (13) in a milling device (51), for obtaining pulverized torrefied biomass (14);
- pyrolysis of the pulverized torrefied biomass (14) in a pyrolysis stage (3), into which superheated steam (34) is also supplied, for obtaining substances (15) comprising solid substances as well as condensable and incondensable gases;
- gasification of the substances (15) in a gasification stage (4), for producing fuel gas (41).

9. Method according to claim 8, **characterized by** comprising a main step of producing the heat required for the chemical and chemical-physical processes taking place in at least said gasification stage (4), said pyrolysis stage (3) and said torrefaction reactor (2), said heat being generated by at least one burner (5).

10. Method according to claim 9, **characterized by** comprising a step of feeding said at least one burner (5) with a second organic substance (11), said burner (5) being adapted to produce combustion products (42).

11. Method according to claim 9, **characterized by** comprising a step of feeding said at least one burner (5) with a fraction (64) of fuel gas (63) produced in the gasification stage (4), said fuel gas (63) being cooled and cleaned by means of a depuration system (8).

12. Method according to claim 10, **characterized in that** the temperature of the combustion products (42), which have already yielded a portion of their heat by thermal conduction, is increased by means of a step of mixing said combustion products (42) of the burner (5) with combustion products taken from an outlet (43) of said burner (5), said mixing step being carried out in a first position (44) upstream of the pyrolysis stage (3) and/or in a second position (45) upstream of the torrefaction stage (2).

13. Method according to claim 8, **characterized by** comprising a step of supplying superheated steam (35) into the torrefaction reactor (2).

14. Method according to claim 8, **characterized by** comprising a step of supplying an air flow (33) into the pyrolysis stage (3), if it has been ascertained that the quantity of indirect heat is not sufficient, said air flow (33) being preheated in a suitable exchanger.

15. Method according to claim 8, **characterized by** comprising a step of supplying superheated steam (34) into the pyrolysis stage (3).

16. Method according to claim 8, **characterized in that** it comprises a step of warming up said dryer (1) through a first portion (21) of an air-steam mixture (25), said mixture (25) being obtained in a plenum chamber (6) by mixing the portion (23) of the gas flow (22) outputted by the dryer (1) with an air flow (31), and that the operating conditions of the gasification stage (4) are kept at reference values through a second portion (26) of the air-steam mixture (25).
